Europäisches Patentamt

European Patent Office

Office européen des brevets

(19)

(11) EP 1 199 181 A2

(12) EUROPEAN PATENT APPLICATION

(43) Date of publication:
24.04.2002 Bulletin 2002/17

(51) Int Cl.7: B41J 3/407, C09D 11/10

(21) Application number: 01124162.7

(22) Date of filing: 10.10.2001

(84) Designated Contracting States:
AT BE CH CY DE DK ES FI FR GB GR IE IT LI LU
MC NL PT SE TR
Designated Extension States:
AL LT LV MK RO SI

(30) Priority: 10.10.2000 JP 2000308613

(71) Applicant: Toyo Ink Manufacturing Co. Ltd.
Tokyo 104-0031 (JP)

(72) Inventors:
• Yoshihiro, Yasuo
  Chuo-ku, Tokyo 104-0031 (JP)
• Nakano, Kaori
  Chuo-ku, Tokyo 104-0031 (JP)
• Fuse, Yoshihiro
  Chuo-ku, Tokyo 104-0031 (JP)

(74) Representative: Koepe, Gerd L., Dipl.-Chem.
Koepe & Partner,
Robert-Koch-Strasse 1
80538 München (DE)

(54) Ink jet printing to synthetic resin substrate

(57) Disclosed is a novel method for ink jet printing on a surface of a substrate made of a synthetic resin, the method comprising the steps of conducting a surface treatment to the surface so as to provide it with a specific surface free energy of 65-72 mJ/m$^2$; providing an activation energy beam-curable ink having a surface tension of 25-40 mN/m; discharging the ink onto the surface with an ink jet printing device thereby forming printed portions of the ink on the surface; and projecting an activation energy beam onto the printed portions. According to the disclosed method, printing articles having desirable image qualities are obtained by achieving a uniform dot diameter of the drop of ink on a synthetic resin substrate by utilizing an ink jet printing process.

**Description**

**BACKGROUND OF THE INVENTION**

**Field of the Invention**

The present invention relates to a printing method using an ink jet printer. More specifically, the present invention relates to a printing method of the surface of a synthetic resin substrate which carries out printing on the surface of a synthetic resin substrate by an ink jet printing process, and a printing system utilizing the method.

**Description of the Prior Art**

Nowadays, printed articles in which printing was made on a synthetic resin substrate are used in various industrial fields. There are many plastic products such as a pet bottle and printed articles made onto printed circuit boards, for such examples. Printing processes such as screen printing and gravure printing that are comparatively easily able to provide printed articles are widely used for the preparation of printing articles above-mentioned. In these processes printed articles are typically made using a solvent-type ink or an ultra violet ray-curable ink. To conduct these processes, however, a procedure to let the intended image carried on a material such as a screen or a cylinder is required prior to the processes. These printing processes are thus not efficient for printing of a small number of production and a large variety of images.

On the other hand, as a method of obtaining printed articles without the image preparation procedure as above mentioned, a method is proposed in which data that have electronically been prepared for forming an intended image are outputted to an ink jet printer and ink jet printing based on the electrical data is conducted. However, in case of synthetic resin materials being used as a substrate to be printed, the substrate is substantially immiscible with the ink used. No penetration of the ink liquid into inside the substrate is not allowed to occur, also, in case of a synthetic resin substrate.

In such a system above considered in relation to an ink jet printing onto a synthetic resin substrate, the ink happens to be peeled out on the surface of the substrate, or on the contrary, happens to be excessively wet. Accordingly, there are problems that a uniform dot diameter cannot be reemerged, for instance, and it has been difficult to obtain a printed article having a desired quality via ink jet printing processes for substrates made of synthetic resin materials.

For instance, Japanese Patent Application Laid-open No. 2000-37943 discloses a printed article in which printing is conducted by using an ultra-violet ray curable ink having a surface tension not smaller than the wetting index of the substrate and curing is subsequently conducted. Although in this document it is reported that the ink can be thickly printed, since the surface free energy of the substrate to be printed is not controlled only ink films having different printing thickness are obtained depending on the substrates, according to the ink disclosed. As a result, a uniform dot diameter cannot be attained within a reproduced image, and thus it is difficult to obtain a printed article having a desired image quality. An activation energy beam-curable ink for an ink jet process is disclosed, for instance, in the United States Patent No. 5,275,646.

**SUMMARY OF THE INVENTION**

Accordingly, one of the objects of the present invention is to obtain a printing article having desired qualities such as the acquisition of a uniform dot diameter by an ink jet printing on the surface of a synthetic resin substrate.

The present invention is a method for ink jet printing on a surface of a substrate made of a synthetic resin, the method comprising the steps of: conducting a surface treatment to said surface so as to provide the surface with a specific surface free energy of 65-72 mJ/m$^2$; providing an activation energy beam-curable ink having a surface tension of 25-40 mN/m; discharging the ink onto the surface having the specific surface free energy with an ink jet printing device, thereby forming printed portions of said ink on the surface; and projecting an activation energy beam onto the printed portions.

In the method, it is preferable that the activation energy beam-curable ink has a viscosity of 10 to 50 mPa·s. It is preferable that the activation energy beam-curable ink comprises a pigment, a compound having two or more of ethylenic double bonds, and a compound having one ethylenic double bond. The surface treatment is preferably at least one selected from the group consisting of corona treatment and plasma treatment. The activation energy beam-curable ink may comprise a silicone resin.

The present invention is also a system for ink jet printing on a surface of a substrate made of a synthetic resin, which comprises: a surface-treating means for conducting a corona treatment and/or plasma treatment on the surface of the substrate made of the synthetic resin to provide the surface with a specific surface free energy of 65 to 72mJ/m$^2$; an activation energy beam-curable ink having a surface tension of 25 to 40 mN/m; a means of ink jet printing to discharge the ink onto the surface having said specific surface free energy; and a means of projecting an activation energy beam onto the surface printed by said inkjet printing.

Ink jet printing is a highly advanced area of today's printing technologies and industries, and many restrictive aspects exist in its constitution, especially in view of the procedure that ink drops must be discharged from a nozzle and splashed onto a surface to be printed. As far as inks used in an ink jet printing are concerned, for instance, there are many technological aspects that must be taken into consideration, such as thermal properties such as surface tension, fluid mechanical properties such as viscosity for a good discharge characteristic, electrical properties (particularly in case of an ink jet system of continuous type) such as electrical conductivity, pH of the ink for securing a good fixation property with a substrate to be printed, influences to these properties that impurity contaminations may bestow, as required properties of the ink other than those required merely as an effective colorant. The specification is thus remarkably severe in general in comparison with other printing systems.

Furthermore, ink jet printing, different from other printing techniques such as screen printing and gravure printing, is a non-impact printing procedure, and is not accompanied with a direct application of pressure when on the substrate ink films are formed to get the image made from ink droplets achieved. Accordingly, ink jet printing systems do not basically include a mechanism of compensating various types of adaptability that may occur between the ink and a surface to be printed, by means of bestowal of pressure from outside onto the surface printed. If certain printing qualities are to be retained even under the technical circumstance, that is, printing by ink jet processes onto the surface made of a synthetic resin substrate, restrictions that are required increase further.

According to the present method for modifying a synthetic resin substrate surface by the process of some appropriate surface treatment techniques, conditions which are inherently required for the printing system of ink jet type and the technical circumstance which is the printing on a synthetic resin substrate surface by means of ink jet process are made combined in a compatible manner, without difficulty. Hence further, when a means for such a surface treatment and a means for ink jet printing are realized in a single, integrated manufacturing system, the advantages the printing method of the present invention has will be made more prominent in its real practice.

According to the present invention, the affinity of inks with a substrate is improved, uniform dots having no cissing can be obtained, and the improvement of adherence property can be attained.

## DETAILED DESCRIPTION OF THE INVENTION

All of the synthetic resins conventionally used in various uses may be used as the material for the substrate for printing used in the present invention. Examples of those synthetic resins include a polyester, a polyvinyl chloride, a polyethylene, a polyurethane, a polypropylene, an acryl resin, a polycarbonate, a polystyrene, an acrylonitrile-butadiene-styrene copolymer, a poly (ethylene terephthalate), and a poly (butadiene terephthalate). The thickness and form of the synthetic resin substrate are not limited at all.

As also exemplified in examples below, the specific surface free energy of the surface of the synthetic resin substrate indicates often a value of about 40 to $60mJ/m^2$. In the present invention, the specific surface free energy is preferably changed to a specific surface free energy of 65 to $72mJ/m^2$ by a surface treatment such as a corona treatment or a plasma treatment. When the value of the specific surface free energy is too small, it is not preferable in general because the cissing of ink drops occurs on a printing substrate at the ink jet printing. In the examples shown below, resin substrates having a specific surface free energy of 67 to $72mJ/m^2$ by a corona treatment and those of 69 to $72mJ/m^2$ by a plasma treatment were obtained, and high qualities of image by an ink jet printing process have been shown. Based on the study which has been extensively carried out by the present inventors, however, the effect intended by the present invention can be substantially attained when the specific surface free energy is within a range of about 65 to $72mJ/m^2$ in either treatment method.

According to at least one surface treatment selected from the group consisting of corona treatment and plasma treatment presently obtainable (available technical level of each technique), a sufficient extent of uniformity of specific surface energy in the surface of a substrate to be image-formed can be controlled and thus is available for realizing an image quality of levels intended in the present invention on a synthetic resin substrate.

It is preferable that the activation energy beam-curable ink jet ink used in the present invention has a surface tension of 25mN/m to 40mN/m. In general, when the surface tension is too small, the wettability of the ink tends to be large for ink jet printing, and when the surface tension is too large, the cissing of the ink tends to occur. In either case, it is not preferable that the uniform dots of the image intended via the ink drops cannot be reemerged on a synthetic resin substrate. In the examples shown below, data concerning the inks having the surface tensions of 37 mN/m, 33 mN/m, and 25mN/m are respectively shown, and the practicality of high quality ink jet printing is exemplified thereby at about a range of 25 to 37 mN/m. However in practice, an ink having a surface tension of about 25 to 40 mN/m can substantially attain the effect intended by the present invention based on studies which have been extensively carried out by the present inventors.

Although so-called ideal model concerning a "contact angle" is not quantitatively applied to the physical system to which the present invention relates, the interface situation which the method of the present invention includes can be at least partially or qualitatively grasped by an ideal model below. In general, in a three-phase contact system in which its solid surface, a fluid 1 and a fluid 2 are brought in contact with each other, the Young's equality below holds good when an ideal condition such as thermal equilibrium condition or the like was assumed.

$$\cos\theta = (\sigma_{s2} - \sigma_{s1})/\sigma_{12}$$

Wherein $\theta$ is a contact angle which the liquid drop of the fluid 1 makes between the surface of the solid and is measured through the fluid 1. $\sigma_{s2}$ is a surface tension at the interface at which the solid is brought in contact the fluid 2, $\sigma_{12}$ is a surface tension at the interface at which the fluid 1 is brought in contact the fluid 2, and $\sigma_{s1}$ is a surface tension at the interface at which the solid is brought in contact the fluid 1.

The situation in the printing face of the ink jet printing is considered using the Young's equation. In the situation in which after the drops of the ink were discharged from the head of an ink jet printer, they reach at the printing face of the synthetic resin substrate and is brought in contact with it, the drops of the ink corresponds to the "fluid 1", the printing face of the synthetic resin substrate to the "surface of the solid" and an around environment, for example atmosphere to the "fluid 2". Further, $\theta$ is deemed as the contact angle which the drops of the ink form with the printing face of the resin, $\sigma_{s2}$ as the specific surface free energy (which is required when the resin forms newly the contact plane with atmosphere) of the printing face of the resin, $\sigma_{12}$ as the surface tension (which the solid is generated when the drops of the ink forms the contact plane with atmosphere), and $\sigma_{s1}$ as the specific interface free energy which is required when the drops of the ink forms newly the contact plane with the surface of the resin.

As mentioned above, the wettability of the drops of the ink against the recording face of the resin is not good when it is too big and too small, and an appropriate range exists. Since the synthetic resin is the printing substrate in the present invention, an appropriate value is determined considering this point. Considering by the illustration formula above, the appropriate value which is included within a range of 0 degree (the right side is equal to 1) to 90 degree (the right side is equal to 0) exists in the contact angle $\theta$. $\sigma_{s1}$ is a quantity which is determined by the combination of the ink and the substrate, and it can be considered that it is the relative action item of both, but when it is assumed to be constant in the technical situation of the surface printing of a resin by the ink jet system which is treated in the present application, it can be considered that the appropriate range is substantially prescribed by $\sigma_{s2}$ of the numerator and $\sigma_{s1}$ of the denominator.

Further, the technical situation of the real ink jet printing may be not easily applied to the ideal model including that the splashing of the drops of the ink jet liquid to the printing face is a dynamic process. Please pay attention to only an idea that the consideration of the present system based on such ideal model imparts partially a scientific indication at studying the system, persistently.

In any event, when the substrate and the respective physical properties of the ink are secured, the ink jet printing to the resin substrate which is accompanied with the good printing quality is realized.

Pigments may be used to the ink jet ink of the present invention as a coloring material. For example, achromatic pigments such as a carbon black, titanium oxide, calcium carbonate and the like or colored pigments can be used. As organic pigments, insoluble azo pigments such as Toluidine Red, Toluidine maroon, Hansa Yellow, Benzidine Yellow, Pyrazolone Red and the like; soluble azo pigments such as Litol Red, Helio Bordeaux, Pigment Scarlet, Permanent Red 2B and the like; derivatives from vat dyes such as alizarine, indanthrone, thioindigo maroon and the like; phthalocyanine-based organic pigments such as Phthalocyanine Blue, Phthalocyanine Green and the like; quinacridone-based organic pigments such as Quinacridone Red, Quinacridone Magenta and the like; perylene-based organic pigments such as Perylene Red, Perylene Scarlet and the like; isoindolinone-based organic pigments such as Isoindolinone Yellow, Isoindolinone Orange and the like; pyranthrone-based organic pigments such as Pyranthrone Red, Pyranthrone Orange and the like; thioindigo-based organic pigments; condensed azo-based organic pigments; benzimidazolone-based organic pigments; quinophthalone-based organic pigments such as Quinophthalone Yellow and the like; isoindoline-based organic pigments such as Isoindoline Yellow and the like; and as other pigments, Flavanthrone Yellow, Acylamide Yellow, Nickel Azo Yellow, Copper Azomethine Yellow, Perinone Orange, Anthrone Orange, Dianthraquinonyl Red, and Dioxazine Violet are exemplified.

When the organic pigments are exemplified by Color Index Number (C.I.), C.I. Pigment Yellows 12, 13, 14, 17, 20, 24, 74, 83, 86, 93, 109, 110, 117, 125, 128, 129, 137, 138, 139, 147, 148, 150, 151, 153, 154, 155, 166, 168 and 185; C.I. Pigment Oranges 16, 36, 43, 51, 55, 59 and 61; C.I. Pigment Reds 9, 48, 49, 52, 53, 57, 97, 122, 123, 149, 168, 177, 180, 192, 202, 206, 215, 216, 217, 220, 223, 224, 226, 227, 228, 238 and 240; C.I. Pigment Violets 19, 23, 29, 30, 37, 40 and 50; C.I. Pigment Blues 15, 15:1, 15:3, 15:4, 15:6, 22, 60 and 64; C.I. Pigment Greens 7 and 36; C.I. Pigment Brown 23, 25 and 26 are mentioned.

Among the above-mentioned pigments, for example, quinacridone-based organic pigments, phthalocyanine-based organic pigments, benzimidazolone-based organic pigments, isoindolinone-based organic pigments, condensed azo-based organic pigments; quinophthalone-based organic pigments, and isoindoline-based organic pigments are preferable because they are superior in light fastness.

The organic pigment is preferably used in the form of fine pigment particles having a mean particle diameter of 10 to 150 nm measured by laser scattering method, in the ink jet recording solution. When the mean particle diameter of the pigment is less than 10 nm, the lowering tendency of the light fastness caused by the small particle size may be observed. When it exceeds 150nm, it becomes difficult to keep the stability of dispersion, the tendency of easily generating the precipitation of the pigment may be observed. Either of the tendencies are not preferable.

The fining of the organic pigment can be carried out by, for example, methods described below. A mixture consisting of at least three components of the organic pigment, water-soluble inorganic salt being 3-fold by weight or more of the organic pigment is made as a clay shape mixture, and violently kneaded by an apparatus such as a kneader or the like to be fined. The fined mixture is charged in water, and stirred using a high-speed mixer to make a slurry. Then, the filtration and washing of the slurry are repeated to remove the water-soluble inorganic salt and the water-soluble solvent. In the fining step, a resin and a pigment dispersant may be added.

As the water-soluble inorganic salt, for example, sodium chloride and potassium chloride are exemplified. These inorganic salts are used at a range of 3-fold by weight or more of the organic pigment, and preferably 20-fold by weight or less. When the amount of the inorganic salt is less than 3-fold by weight, a treated pigment having a desired size is not obtained. Further, when it is more than 20-fold by weight, the washing treatment at later washing step is great, and the substantial treatment amount of the organic pigment becomes little.

The water soluble solvent is used for making an appropriate clay condition of the organic pigment with the water-soluble inorganic salt which is used as a milling aid agent and efficiently carrying out an adequate milling, and is not specifically limited if it a solvent soluble in water, but since the temperature is raised at kneading and the solvent becomes in a condition in which it is easily evaporated, a solvent with a high boiling point having a boiling point of 120 to 250°C is preferable from the point of safety. Examples of water soluble solvents are 2-(methoxymethoxy)ethanol, 2-butoxyethanol, 2-(isopentyloxy)ethanol, 2-(hexyloxy)ethanol, diethylene glycol, diethylene glycol monomethyl ether, diethylene glycol monoethyl ether, diethylene glycol monobutyl ether, triethylene glycol, triethylene glycol monomethyl ether, liquid polyethylene glycol, 1-methoxy-2-propanol, 1-ethoxy-2-propanol, dipropylene glycol, dipropylene glycol monomethyl ether, dipropylene glycol monoethyl ether, low molecular weight polypropylene glycol, and the like.

The pigment in the present invention is preferably contained in the ink jet ink at a range of 3 to 15% by weight in order to obtain an adequate concentration and an adequate light fastness.

As the compound having two or more of ethylenic unsaturated double bonds of the present invention, those called as a prepolymer, an oligomer and the like are included, and specifically, ethylene glycol diacrylate, diethylene glycol diacrylate, triethylene glycol diacrylate, 1,6-hexanediol di(meta)acrylate, neopentyl glycol diacrylate, 1,9-nonanediol diacrylate, hydroxypivalic acid neopentyl glycol diacrylate, tripropylene glycol diacrylate, polyethylene glycol diacrylate, trimethylolpropane triacrylate, ethoxidized trimethylolpropane triacrylate, propoxidized trimethylolpropane triacrylate, pentaerythritol triacrylate, dipentaerythritol hexaacrylate, tri(2-hydroxyethylisocyanurate) triacrylate, propoxylateglyceryl triacrylate, urethane acrylate, epoxy acrylate, and polyester acrylate are exemplified. These compounds may be used alone or two or more may be used in combination according to requirement. These compounds having two or more of ethylenic unsaturated double bonds have effects of increasing curing rate and crosslinking density and improving water resistance, hardness and brilliance and the like. These compounds are preferably used by 30 to 80% by weight in the ink in order to adequately obtain the effects.

As the compound having one ethylenic unsaturated double bond of the present invention, for example, phenoxyethyl acrylate, lauryl acrylate, N-vinylformamide, acryloylmorpholine, 3-methoxybutyl acrylate, tetrahydrofurfuryl acrylate, isobutyl acrylate, t-butyl acrylate, iso-octyl acrylate, stearyl acrylate, isobornyl acrylate, buthoxyethyl acrylate, octyl/decyl acrylate, and N-vinyl pyrrolidone are exemplified. These compounds may be used alone or two or more may be used in combination according to requirement. These are effective as a reactive diluent, and 10 to 60% by weight in the ink is preferably used.

When ultra violet rays are used as an activation energy beam in the present invention, a photo polymerization initiator is compounded in the ink. As the exemplification of the photo polymerization initiator, for example, there are benzophenone, 4,4-diethylaminobenzophenone, diethylthioxanthone, 2-methyl-1-(4-methylthio)phenyl-2-morphorinopropan-1-on, 4-benzoyl-4'-methyldiphenylsulfide, 1-chloro-4-propoxythioxanthone, isopropylthioxanthone, 2-hydroxy-2-methyl-1-phenylpropan-1-on, 1-hydroxy-cyclohexyl-phenylketone, bis-2,6-dimehtoxybenzoyl-2,4,4-trimethylpentylphosphine oxide, 1-[4-(2-hydroxyethoxy)-phenyl]-2-hydroxy-2-methyl-1-propan-1-on, 2,2-dimethyl-2-hydroxyacetophenone, 2,2-dimethoxy-2-phenyl acetophenone, 2,4,6-trimethylbenzyl-diphenylphosphine oxide, and 2-benzyl-2-dimethylamino-1-(morpholinophenyl)-butan-1-on.

A photo promoter such as p-dimethylamino benzoic acid ethyl ester, pentyl-4-dimethylamino benzoate or the like may be used in combination with the photo polymerization initiator.

In the ink jet ink of the present invention, an aromatic derivative such as, for example, hydroquinone, p-methoxyphenol, t-butylcathecol, pyrogallol or the like is preferably compounded by 0.01 to 5% by weight in the ink.

As the pigment dispersant which may be used in the ink jet recording liquid of the present invention, for example, a hydroxy group-containing carboxylic acid ester, a salt of a long chain polyaminoamide with a high molecular weight acid ester, a salt of a high molecular weight carboxylic acid, a salt of a long chain polyaminoamide with a polar acid ester, a high molecular weight unsaturated acid ester, a high molecule copolymer, a modified polyurethane, a modified polyacrylate, a poly(ether ester) type anion-based activator, a salt of a condensate of naphthalenesulfonic acid with formalin, a salt of a condensate of aromaticsulfonic acid with formalin, a polyoxyethylene alkyl phosphate, a polyoxyethylene nonylphenyl ether, stearylamine acetate, and a pigment derivative may be mentioned.

Specifically, as examples of the pigment dispersant, for example, there are "Anti-Terra-U (polyaminoamide phosphate)" manufactured by BYK Chemie Co., Ltd., "Anti-Terra-203/204 (salt of a high molecular weight polycarboxylic acid)", "Disperbyk-101 (polyaminoamide phosphate and acid ester), 107 (hydroxy group-containing carboxylic acid ester), 110 (copolymer containing an acid group), 130 (polyamide), 161, 162, 163, 164, 165, 166, 170 (high molecule copolymer)", "400", "Bykumen" (high molecular weight unsaturated acid ester), "BYK-P104, P105" (high molecular weight unsaturated acid polycarboxylic acid), "P104S, 240S (high molecular weight unsaturated polycarboxylic acid and silicone-based compound)", and "Lactimon" (long chain amine, unsaturated polycarboxylic acid, and silicone).

Further, as examples of the pigment dispersant, for example, there are "Efka's 44, 46, 47, 48, 49, 54, 63, 64, 65, 66, 71, 701, 764 and 766", and "Efka POLYMER 100 (modified polyacrylate), 150 (aliphatic-based modified polymer), 400, 401, 402, 403, 450, 451, 452 and 453 (modified polyacrylate), 745 (copper phthalocyanine-based)", which are manufactured by Efka CHEMICALS Co., Ltd.; "FLOWLEN TG-710" (urethane oligomer), "FLOWNON SH-290, SP-1000", "POLYFLOW No.50E, No.300 (acryl-based copolymer)" manufactured by Kyoeisha Chemical Co., Ltd.; "DISPARLON KS-860, 873SN, 874 (polymer dispersant)", #2150 (aliphatic polyvalent carboxylic acid), #7004 (polyether ester type) manufactured by Kusumoto Chemicals, Co., Ltd.

Furthermore, as examples of the pigment dispersant, for example, there are DEMOL RN, N (sodium salt of a condensate of naphthalenesufonic acid with formalin), MS, C, SN-B (sodium salt of a condensate of aromatic sulfonic acid with formalin,), and EP, which are manufactured by Kao Corporation. There are also "HOMOGENOL L-18 (polycarboxylic acid-type polymer)", "EMULGEN 920, 930, 931, 935, 950 and 985 (polyoxyethylene nonylphenyl ether)", "ACETAMIN 24 (coconutamine acetate), and 86 (stearylamine acetate)". There are further also "SOLSPARZ 5000 (phthalocyanine ammonium salt type), 13240, 13940 (polyester amine type), 17000 (aliphatic acid amine type), and 24000" manufactured by Zeneca; "NIKKOL T106 (polyoxyethylene sorbitan monooleate), MYS-IEX (polyoxyethylene monostearate), and Hexagline 4-0 (hexaglyceryl tetraoleate)" manufactured by Nikko Chemicals, Co., Ltd.

The pigment derivative is a compound in which a functional group which is effective for pigment dispersion such as a phthalimidomethyl group, an amino group, and a triazine group is introduced in the molecular skeleton of a pigment. The pigment derivative indicated by the under-mentioned general formula (1) is preferably used:

$$P\text{-}[X\text{-}Y\text{-}Z\text{-}N(R_1)R_2]_n \hspace{4cm} \text{General formula (1)}$$

In the formula, P is an organic colorant residual group. X is a divalent bonding group which consists of a chemically rational combination which is constituted by 2 to 15 atoms selected from S, C, N, O and H. Y is a direct bonding, -NR- (wherein R is H or an alkyl group having 1 to 18 carbon atoms) or -O-. Z is an alkylene group having 1 to 6 carbon atoms. Each of $R_1$ and $R_2$ is independently an alkyl group having 1 to 18 carbon atoms which may be optionally substituted (or, $R_1$ with $R_2$ may form a heterocyclic group). 'n' is an integer of 1 to 3.

As an organic colorant residual group P, some colorant residual groups such as azo, phthalocyanine, quinacridone, benzimidazole, anthraquinone, perylene, perinone, thioindigo, dioxazine, isoindolinone, quinophthalone, triphenylmethane, metal complex salt, and the like are mentioned, for instance.

As X, for example, $-SO_2-$, -CO-, $-CH_2-$, $-CH_2S-$, $-CR, H_2O-$, -COO-, -NH-, $-CH_2NHCOCH-$, or a combination thereof are mentioned, but $-SO_2-$, -CO- and $-CH_2-$ are preferable in particular. When $R_1$ with $R_2$ forms a heterocyclic group, N, O and S are mentioned as its constitutional elements other than the carbon of the heterocyclic.

The molecular skeleton of the organic pigment is not always required to be coincided with the molecular skeleton of P in the pigment derivative. It is typically preferable, however, that the two compounds of a same type are used in combination, in view of the sameness of the hue attained from each of the pigment itself and the derivative above-mentioned. For instance, it is preferable that for a blue pigment a phthalocyanine residual group is used, for a red pigment quinacridone residual group, for a yellow pigment a benzimidazole residual group, and so on, in the same manner.

Examples of pigment derivatives that may be used in the present invention are shown in Table 1.

Table 1

| Pigment Derivatives | | |
|---|---|---|
| | Residual Group of Organic Colorant | Substituent |
| a | C.I. Pigment Blue 15 | $-SO_2NH(CH_2)_2N(C_2H_5)_2$ |
| b | C.I. Pigment Yellow 24 | $-SO_2NH(CH_2)_2N(C_3H_7)_2$ |
| c | C.I. Pigment Violet 19 | $-SO_2NH(CH_2)_3N(C_4H_9)_2$ |
| d | C.I. Pigment Blue 15 | $-CH_2SCH_2N(C_3H_7)_2$ |
| e | C.I. Pigment Yellow 83 | $-SO_2NH(CH_2)_3N(C_2H_5)_2$ |
| f | C.I. Pigment Yellow 108 | $-CH_2OCH_2N(C_2H_5)_2$ |
| g | C.I. Pigment Violet 19 | $-CH_2S-CH_2N(C_4H_9)_2$ |

The ink jet ink contains a pigment dispersant preferably at a range of 0.1 to 10% by weight. These pigment dispersants may be added during the above-mentioned fining step of the pigment.

In the ink, an organic solvent may be added for some purposes such as that of adjusting the fixation amount of the ink. The organic solvent is a medium which disperses the pigment together with the activation energy beam-curable compound, and functions also as a dissolving agent for a resin added, an adjusting agent of viscosity of the ink liquid, and an adjusting agent of drying process. Particularly in the present invention, since the ink jet recording onto a non penetrating recording medium such as a synthetic resin substrate involves a specifically given technical situation, it is desirable that some appropriate solvent is used in an appropriate amount while also considering the purpose of reducing the unevenness which may be generated within the image formed by the bestowal of the ink drops to the recording substrate surface. For example, as an organic solvent having a boiling point of 120°C or less may become a good dispersing medium of the pigment and function as a good dissolving agent of the resin for fixation, such a solvent is preferably used. For an impenetrable recording medium, a solvent having a low boiling point may be used for the purpose of improving the drying speed.

As the organic solvent, an alcohol, an aromatic hydrocarbon, a ketone, an ester, an aliphatic hydrocarbon, a higher fatty acid, a carbitol, a cellosolve, a higher fatty acid ester and the like are mentioned. As the alcohol, methanol, ethanol, propanol, butanol and the like are mentioned. As the aromatic hydrocarbon, toluene, xylene and the like are mentioned. As the ketone, methyl ethyl ketone, methyl isobutyl ketone, cyclohexanone and the like are mentioned. As the ester, ethyl acetate, butyl acetate and the like are mentioned.

The organic solvent is preferably contained in the ink at a range of 0 to 30% by weight. These solvents may be used alone, but two or more may be also used in combination in order to carry out the adjustment of viscosity of the ink, the adjustments of the formation and drying properties of the ink dots on a non penetrating-type printing medium, penetrating properties in case of paper, the adjustment of wettability of the head and other liquid contact system within the apparatus with the ink jet liquid used.

In the ink, a resin that has no ethylenic double bond and dissolves in the organic liquid and/or the above-mentioned activation energy beam-curable compound may be contained for the purposes of enhancing the fixation properties of the ink on the surface of a medium to be printed and/or adjusting the extending properties of ink dots on the surface. A thermo-setting resin or a thermoplastic resin may be used for a portion of the ink. Especially, a resin which has good compatibility with the activation energy beam-curable compound may be used. Those resins which were exemplified as a resin which may be compounded with the composition for forming the ink absorbing layer may be used here also.

The ink may be produced by adequately dispersing a pigment together with an activation energy beam-curable compound, and additionally according to requirement, a resin, an organic solvent, and some pigment dispersant, by a typical dispersing apparatus such as a sand mill. It is preferable to preliminarily prepare a concentrated liquid containing a high concentration of the pigment and diluting it with the activation energy beam-curable compound. Since adequate dispersion can be obtained by using a typical dispersing apparatus such as a sand mill, an excessive energy is not required, and a long period of time for dispersing is also not required. Therefore, changes in ink qualities during the dispersing process hardly occur and a superior stable ink is produced. The ink is preferably filtrated by a filter having a pore diameter of 3 micron or less, and further preferably 1 micron or less.

It is preferable that the viscosity of the ink at 25°C is adjusted a bit high, that is, to a value of 10-50 mPa•s. An ink having a viscosity at 25°C of 10 to 50mPa•s reveals always a stable discharge characteristic from a head of a ink jet printer, not only at a typical frequency of 4 to 10 kHz but also at a high frequency of 10 to 50 kHz.

When the viscosity is less than 10mPa•s, the tendency will be observed that ink discharge from a head does not follow in case of a high frequency head, which is what we call 'lowering of discharge follow property'. When it exceeds 50mPa•s, degeneration of each discharge itself occurs, the stability of ink discharge becomes inferior and it cannot be discharged at all, at the worst, even if some mechanism for lowering the viscosity of the ink by heating is assembled in the head.

It is preferable that the ink jet ink has preferably an electric conductivity of 10 μS/cm or less at a Piezo head and is an ink having no electric corrosion in the inside of the head. In case of a continuous type ink jet system, it may be necessary to adjust the electric conductivity by using some electrolyte, and in this case, it may be required to adjust the electric conductivity to 0.5mS/cm or more.

The curing means herein termed "activation energy beam" includes an ultraviolet photon beam and electron beam. However, these are primary examples of the curing means, and thus it is not limitatively considered in the present invention to those of two, as long as it has a curing effect on the ink jet ink used in accordance with the present invention.

## EXAMPLES

The present invention is further illustrated in detail by the examples below. In these examples, a surface energy analytical apparatus CA-XE manufactured by KYOWA KAIMENNKAGAKU Co., Ltd. was used for the measurement and analysis of the surface free energy on the surface of a resin substrate. In the descriptions following, "parts" means "parts by weight" without a contrary notice of meaning.

### PREPARATION OF PIGMENT

In one gallon kneader made of stainless steel (manufactured by Inoue Seisakusho), 250 parts of a crude copper phthalocyanine (manufactured by Toyo Ink Mfg. Co., Ltd.), 2500 parts of sodium chloride, and 160 parts of polyethylene glycol ("POLYETHYLENE GLYCOL 300" manufactured by Tokyo Kasei Kogyo Co., Ltd.) were charged, and the mixture was kneaded for 3 hours. After the kneading, the mixture was charged in 2.5 liter of warm water, and stirred for about 1 hour by a high speed mixer while heating at about 80°C to make a slurry. Then, the slurry was repeatedly filtrated and washed for five times, sodium chloride and the solvent were removed, and then spray dry was carried out to dry it. Thus, the pigment material P1 which was treated was obtained.

In a one gallon kneader made of stainless steel, 250 parts of a quinacridone-based red pigment ("CINQUASIA MAGENTA" RT-355-D" manufactured by Ciba Geigy Co., Ltd.), 2500 parts of sodium chloride, and 160 parts of polyethylene glycol ("POLYETHYLENE GLYCOL 300") were charged. The similar procedure as in pigment material P1 was carried out for the mixture to obtain the pigment material P2 which was treated.

In a one gallon kneader made of stainless steel, 250 parts of a benzimidazolone-based yellow pigment ("HOSTAPERM YELLOW H3G" manufactured by Hoechst Co., Ltd.), 2500 parts of sodium chloride, and 160 parts of polyethylene glycol ("POLYETHYLENE GLYCOL 300") were charged. The similar procedure as in the pigment material P1 was carried out for the mixture to obtain the pigment material P3 which was treated.

Further, a carbon black pigment "Printex 150T" (manufactured by Degussa) was used as the pigment material P4.

### PRODUCTION OF INK

In a sand mill, 10 parts by weight of the respective pigment materials P1 to P4, 55 parts of trimethylolpropane triacrylate, 40 parts of N-vinyl formamide, and a dispersant were charged by a combination shown in Table 2, and each of the mixtures was dispersed for 4 hours. Thus, the respective original liquids of the activation energy beam-curable recording liquids 1 to 4 were obtained.

To the original liquids, the photo initiator consisting of components below was added, and stirring was mildly carried out until it was dissolved in the original liquids. Then, the mixtures were filtrated by pressuring with a membrane filter. Thus, each of the inks 1 to 4 was obtained.

| IRGACURE 907 | 6.5 parts |
| Isopropyl thioxanthone | 3.5 parts |
| Additive | 0.1 parts |

Table 2

| Combination of Pigment and Dispersant | | | | |
|---|---|---|---|---|
| Ink No. | Ink 1 | Ink 2 | Ink 3 | Ink 4 |
| Pigment material P1 | 10 parts | - | - | - |

Table 2   (continued)

| Combination of Pigment and Dispersant | | | | |
|---|---|---|---|---|
| Ink No. | Ink 1 | Ink 2 | Ink 3 | Ink 4 |
| Pigment material P2 | - | 10 parts | - | - |
| Pigment material P3 | - | - | 10 parts | - |
| Pigment material P4 | - | - | - | 10 parts |
| Dispersant 1 | 3 parts | - | - | - |
| Dispersant 2 | - | - | 3 parts | 3 parts |
| Dispersant 3 | 1.5 parts | - | - | 1.5 parts |
| Dispersant 4 | - | 1.5 parts | 1.5 parts | - |
| Dispersant 5 | - | 3 parts | - | - |

Dispersant 1:
Polyester amine-based dispersant ("SOLSPERSE 13940" manufactured by AVECIA K.K.)
Dispersant 2:
Fatty acid modified-based dispersant ("SOLSPERSE 24000" manufactured by AVECIA K.K.)
Dispersant 3:
Blue pigment dispersant ("SOLSPERSE 5000" manufactured by AVECIA K.K.)
Dispersant 4:
Yellow pigment dispersant ("SOLSPERSE 22000" manufactured by AVECIA K.K.)
Dispersant 5:
Polycarboxylic acid type polymer dispersant ("HOMOGENOL L-18" manufactured by KAO Co., Ltd.)

The values of each viscosity and surface tension of Inks 1-4 obtained were measured and evaluated as follows:

Table 3

| Ink No. | Viscosity at 25°C | Surface Tension |
|---|---|---|
| Ink 1 | 18mPa • s | 37mN/m |
| Ink 2 | 22mPa • s | 37mN/m |
| Ink 3 | 22mPa • s | 37mN/m |
| Ink 4 | 20mPa • s | 37mN/m |

## PREPARATION OF PRINTING SUBSTRATE

The printing substrates used are four kinds, which were shown in Table 4. The respective printing substrates obtained by carrying out the corona treatment on the surface under conditions below were prepared:
Corona treatment machine: MULTIDYNE 1 (output; 800W, voltage; 2×12kV) manufactured by 3DT Corporation. The distance against an electrode was 5mm, and treatment was carried out at a speed of 2m/min. Further, the respective printing substrates obtained by carrying out the plasma treatment on the surface under conditions below were prepared:

Voltage; 0.5kV, current; 400mA, degree of vacuum; 0.1 Toor
Further, Table 4 shows the measurement values of the specific surface free energy of the substrate surface of the respective substrates, which were the substrate which was treated with corona treatment, the substrate which was treated with plasma treatment, and the substrate which was not treated at all.

The ink jet printer used for printing was a test machine which used a head manufactured by Xaar Co., Ltd.

Table 4

| Surface free energy (mN/m) of each synthetic resin substrate | | | |
|---|---|---|---|
| | No treatment | After corona treatment | After plasma Treatment |
| Acrylonitrile-butadiene-styrene copolymer (ABS) | 46 | 71 | 72 |
| Poly(butadiene terephthalate) (PBT) | 60 | 72 | 70 |
| Polyethylene (PE) | 41 | 67 | 69 |
| Polystyrene (PS) | 57 | 70 | 70 |

### Example 1

Printing was carried out on the surfaces of the respective substrates within one day after the corona treatment using each of the Inks 1-4

### Example 2

Printing was carried out in the same manner as in Example 1 except that each of the inks obtained by further adding a silicone resin and adjusting the surface tension at 33mN/m was used. There was no change of viscosity of the respective inks before and after the addition of the silicone resin. In Table 5, the inks prepared (modified from original Inks 1-4) and used in Example 2 are shown as "Ink 1(e2)", "Ink 2(e2)", and so on.

### Example 3

Printing was carried out in the same manner as in Example 1 except that each of the inks obtained by further adding a silicone resin and adjusting the surface tension at 25mN/m was used. There was no change of viscosity of the respective inks before and after the addition of the silicone resin. In Table 5, the inks prepared (modified from original Inks 1-4) and used in Example 3 are shown as "Ink 1(e3)", "Ink 2(e3)", and so on.

### Example 4

Printing was carried out on the surfaces of the respective substrates within one day after the plasma treatment using Inks 1-4.

### Example 5

Printing was carried out on the surfaces of the respective substrates within one day after the plasma treatment using the inks that were prepared and used in Example 2.

### Example 6

Printing was carried out on the surfaces of the respective substrates within one day after the plasma treatment using the inks that were prepared and used in Example 3.

### Example 7

Printing was carried out in the same manner as in Example 1 except that each of the inks obtained by adding, to each of Inks 1-4, isopropyl alcohol and adjusting the viscosity at 10cps was used. In Table 5, the inks prepared (modified from original Inks 1-4) and used in Example 7 are shown as "Ink 1(e7)", "Ink 2(e7)", and so on.

### Example 8

Printing was carried out in the same manner as in Example 4 except that each of the inks obtained by adding, to each of Inks 1-4, isopropyl alcohol and adjusting the viscosity at 10cps was used.

### Comparative Example 1

Printing was carried out in the same manner as in Example 1 except that each substrate with no treatment was used.

### Comparative Example 2

Printing was carried out in the same manner as in Example 2 except that each substrate with no treatment was used.

### Comparative Example 3

Printing was carried out in the same manner as in Example 3 except that each substrate with no treatment was used.

### Comparative Example 4

Printing was carried out in the same manner as in Example 7 except that each substrate with no treatment was used.

Further, although printing was tried to be carried out using the ink obtained by adding the silicone resin to Ink 1 and thereby adjusting the surface tension at 18mN/m, being different from Examples 1 to 6, the discharge of the ink from the printer head was impossible in this case, and the printing could not be carried out.

The results of evaluation are shown in Table 5. In Table 5, "Quality of Image" shows the result of visual observation of the properties of ink drops after being printed on various substrates by the ink jet printer. In the table, 'cissing' observed is the case where an ink dot which has been discharged from the nozzle of the ink jet printer did not spread on the substrate like a "soft ball", and 'thick' is the case where an ink dot discharged from the nozzle spread too broadly, like a drop of mercury on the table, for example. 'good' is the case where an ink dot discharged from the nozzle did spread up to an extent intermediate between the first case and the second case, which looks like a hemisphere capsized on the table and is an appropriate one for good ink jet printing.

After the ink was entirely cured by ultra violet rays irradiation after printing, an adhesive tape was adhered on the printed portion, the portion was visually observed after peeling, and the adherence property was evaluated by representing that when the peeling of printing was observed, it is described as ×, and when it was not observed, it is described as ○.

Table 5

| | SUBSTRATE | Quality of Image | | | | Adherence Property | | | |
|---|---|---|---|---|---|---|---|---|---|
| | | ABS | PBT | PE | PS | ABS | PBT | PE | PS |
| Example 1 | Ink 1 | Good | Good | Cissing slightly | Good | ○ | ○ | ○ | ○ |
| | Ink 2 | Good | Good | Cissing slightly | Good | ○ | ○ | ○ | ○ |
| | Ink 3 | Good | Good | Cissing slightly | Good | ○ | ○ | ○ | ○ |
| | Ink 4 | Good | Good | Cissing slightly | Good | ○ | ○ | ○ | ○ |
| Example 2 | Ink 1(e2) | Good | Good | Good | Good | ○ | ○ | ○ | ○ |
| | Ink 2(e2) | Good | Good | Good | Good | ○ | ○ | ○ | ○ |
| | Ink 3(e2) | Good | Good | Good | Good | ○ | ○ | ○ | ○ |
| | Ink 4(e2) | Good | Good | Good | Good | ○ | ○ | ○ | ○ |
| Example 3 | Ink 1(e3) | Thick slightly | Thick slightly | Good | Thick slightly | ○ | ○ | ○ | ○ |
| | Ink 2(e3) | Thick slightly | Thick slightly | Good | Thick slightly | ○ | ○ | ○ | ○ |
| | Ink 3(e3) | Thick slightly | Thick slightly | Good | Thick slightly | ○ | ○ | ○ | ○ |
| | Ink 4(e3) | Thick slightly | Thick slightly | Good | Thick slightly | ○ | ○ | ○ | ○ |
| Example 4 | Ink 1 | Good | Good | Good | Good | ○ | ○ | ○ | ○ |
| | Ink 2 | Good | Good | Good | Good | ○ | ○ | ○ | ○ |
| | Ink 3 | Good | Good | Good | Good | ○ | ○ | ○ | ○ |

EP 1 199 181 A2

| | | | | | | | | | |
|---|---|---|---|---|---|---|---|---|---|
| | Ink 4 | Good | Good | Good | Good | ○ | ○ | ○ | ○ |
| Example 5 | Ink 1(e2) | Good | Good | Good | Good | ○ | ○ | ○ | ○ |
| | Ink 2(e2) | Good | Good | Good | Good | ○ | ○ | ○ | ○ |
| | Ink 3(e2) | Good | Good | Good | Good | ○ | ○ | ○ | ○ |
| | Ink 4(e2) | Good | Good | Good | Good | ○ | ○ | ○ | ○ |
| Example 6 | Ink 1(e3) | Good | Good | Good | Good | ○ | ○ | ○ | ○ |
| | Ink 2(e3) | Good | Good | Good | Good | ○ | ○ | ○ | ○ |
| | Ink 3(e3) | Good | Good | Good | Good | ○ | ○ | ○ | ○ |
| | Ink 4(e3) | Good | Good | Good | Good | ○ | ○ | ○ | ○ |
| Example 7 | Ink 1(e7) | Good | Good | Good | Good | ○ | ○ | ○ | ○ |
| | Ink 2(e7) | Good | Good | Good | Good | ○ | ○ | ○ | ○ |
| | Ink 3(e7) | Good | Good | Good | Good | ○ | ○ | ○ | ○ |
| | Ink 4(e7) | Good | Good | Good | Good | ○ | ○ | ○ | ○ |
| Example 8 | Ink 1(e7) | Good | Good | Good | Good | ○ | ○ | ○ | ○ |
| | Ink 2(e7) | Good | Good | Good | Good | ○ | ○ | ○ | ○ |
| | Ink 3(e7) | Good | Good | Good | Good | ○ | ○ | ○ | ○ |
| | Ink 4(e7) | Good | Good | Good | Good | ○ | ○ | ○ | ○ |
| Comp. Ex. 1 | Ink 1 | Cissing largely | Cissing largely | Cissing largely | Cissing largely | × | × | × | × |
| | Ink 2 | Cissing largely | Cissing largely | Cissing largely | Cissing largely | × | × | × | × |
| | Ink 3 | Cissing largely | Cissing largely | Cissing largely | Cissing largely | × | × | × | × |
| | Ink 4 | Cissing largely | Cissing largely | Cissing largely | Cissing largely | × | × | × | × |

EP 1 199 181 A2

| Comp. Ex. 2 | Ink 1(e2) | Cissing largely | Cissing largely | Cissing largely | Cissing largely | × | × | × | × |
| | Ink 2(e2) | Cissing largely | Cissing largely | Cissing largely | Cissing largely | × | × | × | × |
| | Ink 3(e2) | Cissing largely | Cissing largely | Cissing largely | Cissing largely | × | × | × | × |
| | Ink 4(e2) | Cissing largely | Cissing largely | Cissing largely | Cissing largely | × | × | × | × |
| Comp. Ex. 3 | Ink 1(e3) | Cissing largely | Cissing largely | Cissing largely | Cissing largely | × | × | × | × |
| | Ink 2(e3) | Cissing largely | Cissing largely | Cissing largely | Cissing largely | × | × | × | × |
| | Ink 3(e3) | Cissing largely | Cissing largely | Cissing largely | Cissing largely | × | × | × | × |
| | Ink 4(e3) | Cissing largely | Cissing largely | Cissing largely | Cissing largely | × | × | × | × |
| Comp. Ex. 4 | Ink 1(e7) | Cissing largely | Cissing largely | Cissing largely | Cissing largely | × | × | × | × |
| | Ink 2(e7) | Cissing largely | Cissing largely | Cissing largely | Cissing largely | × | × | × | × |
| | Ink 3(e7) | Cissing largely | Cissing largely | Cissing largely | Cissing largely | × | × | × | × |
| | Ink 4(e7) | Cissing largely | Cissing largely | Cissing largely | Cissing largely | × | × | × | × |

**EP 1 199 181 A2**

**Claims**

1. A method for ink jet printing on a surface of a substrate made of a synthetic resin, said method comprising the steps of:

   (a) conducting a surface treatment to said surface so as to provide the surface with a specific surface free energy of 65-72 mJ/m$^2$;
   (b) providing an activation energy beam-curable ink having a surface tension of 25-40 mN/m;
   (c) discharging the ink onto the surface having the specific surface free energy with an ink jet printing device, thereby forming printed portions of said ink on the surface; and,
   (d) projecting an activation energy beam onto the printed portions.

2. The method according to claim 1, wherein the activation energy beam-curable ink has a viscosity of 10 to 50 mPa • s.

3. The method according to claim 1, wherein the activation energy beam-curable ink comprises a pigment, a compound having two or more of ethylenic double bonds, and a compound having one ethylenic double bond.

4. The method according to claim 1, wherein the surface treatment is at least one selected from the group consisting of corona treatment and plasma treatment.

5. The method according to claim 1, wherein the activation energy beam-curable ink comprises a silicone resin.

6. A system for ink jet printing on a surface of a substrate made of a synthetic resin, said system comprising:

   (a) a surface-treating means for conducting a corona treatment and/or plasma treatment on the surface of the substrate made of the synthetic resin to provide the surface with a specific surface free energy of 65 to 72mJ/m$^2$;
   (b) an activation energy beam-curable ink having a surface tension of 25 to 40 mN/m;
   (c) a means of ink jet printing to discharge the ink onto the surface having said specific surface free energy; and,
   (d) a means of projecting an activation energy beam onto the surface printed by said inkjet printing.